# EUROPEAN PATENT APPLICATION

(11) **EP 3 748 821 A1**
(43) Date of publication of application: **09.12.2020**
(21) Application number: 19178253.1
(22) Date of filing: 04.06.2019
(51) Int. Cl.: H02K 9/06, H02K 1/32

(54) **ELECTRICAL MACHINES**

(71) Applicant: Hamilton Sundstrand Corporation, Charlotte, NC 28217 (US)
(72) Inventor: PAGE, Andrew E, Tring, Hertfordshire HP23 4QD (GB); SAWATA, Tadashi, Coventry, CV3 5BN (GB)
(74) Representative: Dehns

(57) **Abstract**

A rotor (6) for an electrical machine (2), the rotor (6) comprises a radially inner rotor hub (22) rotatable about an axis of rotation (A) which defines an axial direction of the rotor (6), a radially outer rotor rim (24) supporting or configured to support a magnet (36) and a plurality of spokes (26) extending between the rotor hub (22) and the rotor rim (24) for supporting the rotor rim (24). The spokes (26) are arranged relative to the axial direction of the rotor so as to induce a flow of air through the rotor (6) when the rotor (6) rotates about the axis (A).

## Description

### TECHNICAL FIELD

The present disclosure relates to rotary electrical machines and in particular to cooling of electrical machines.

### BACKGROUND

Rotary electrical machines comprise a rotor and a stator which, depending on whether the machine is being operated as a motor or a generator, will either produce rotational movement in response to an electrical input to the machine or produce power in response to relative rotary movement of the rotor and stator. The rotor may comprise permanent magnets mounted in close proximity to the stator. In high power machines, the rotor may be cooled. This is an important factor in achieving high power densities since the operating temperature of the machine is normally limited by the temperature rating of insulation materials used in the machine.

Many large motors and generators employ air cooling and comprise an external impeller connected to the rotor of the machine to drive air through it. However, such an impeller requires additional structure to support it, which adds mass, complexity, and cost to the machine.

### SUMMARY

From a first aspect, the disclosure provides a rotary electrical machine comprising a stator and a rotor. The rotor comprises a radially inner rotor hub rotatable about an axis of rotation which defines an axial direction of the rotor, a radially outer rotor rim configured to support a magnet, and a plurality of spokes extending between the rotor hub and the rotor rim for supporting the rotor rim. The spokes are arranged relative to the axial direction of the rotor so as to induce a flow of air through the rotor when the rotor rotates about the axis of rotation.

The disclosure also provides a rotor for an electrical machine. The rotor comprises a radially inner rotor hub rotatable about an axis of rotation which defines an axial direction of the rotor, a radially outer rotor rim (24) supporting or configured to support a magnet and a plurality of spokes extending between the rotor hub and the rotor rim for supporting the rotor rim. The spokes are arranged relative to the axial direction of the rotor so as to induce a flow of air through the rotor when the rotor rotates about the axis.

In embodiments of the disclosure, the spokes may be arranged at an angle to the axial direction to induce the flow of air.

In some embodiments, the spokes may be arranged at an angle of between 10° and 40° to the axial direction, for example at an angle of 25° to the axial direction.

In some embodiments, the spokes may be angled at a constant angle relative to the axial direction along their radial extent.

In various embodiments, the spokes may be angled at a constant angle relative to the axial direction along their longitudinal extent.

In some embodiments, the spokes may be rectilinear in cross section in the axial direction.

In other embodiments, the spokes may be curved in cross section in the axial direction.

In yet further embodiments, the spokes may be airfoil shaped in cross section in the axial direction.

In various embodiments, the spokes may extend radially at their leading edges.

In various embodiments, the rotor hub, the rotor rim and the spokes may be constructed as a unitary one piece component.

In various embodiments, the rotor may further comprise an annular front wall and an annular rear wall extending radially outwardly from the rotor rim. A magnet, for example a permanent magnet, may be retained axially between the annular front wall and the annular rear wall.

The disclosure also provides a method of manufacturing a rotor for an electrical machine, the rotor comprising a radially inner rotor hub rotating in use about an axis of rotation defining an axial direction of the rotor, a radially outer rotor rim for supporting a magnet and a plurality of spokes extending between the rotor hub and the rotor rim for supporting the rotor rim. The method comprises arranging the spokes relative to the axial direction of the rotor so as to induce a flow of air through the rotor when the rotor rotates.

The spokes may be angled relative to the axial direction of the rotor so as to induce a flow of air through the rotor when the rotor rotates.

The disclosure also provides a method of cooling an electric machine comprising a stator and a rotor, the method comprising inducing an airflow through the machine by rotating the rotor, the rotor comprising a radially inner rotor hub rotating about an axis of rotation defining an axial direction of the rotor, a radially outer rotor rim supporting a magnet and a plurality of spokes extending between the rotor hub and the rotor rim for supporting the rotor rim, the spokes being arranged relative to the axial direction of the rotor so as to induce the flow of air through the rotor when the rotor rotates.

### BRIEF DESCRIPTION OF DRAWINGS

An embodiment of the disclosure will now be described by way of example only with reference to the accompanying drawings in which:
Figure 1 shows an embodiment of electrical machine in accordance with the disclosure;
Figure 2 shows the rotor of the electrical machine of Figure 1;
Figure 3 shows a front view of the rotor of Figure 2, with certain parts removed for clarity;
Figure 4 shows a cross section taken along line A-A of Figure 3; and
Figure 5 shows a cross section taken along line B-B of Figure 3.

### DETAILED DESCRIPTION

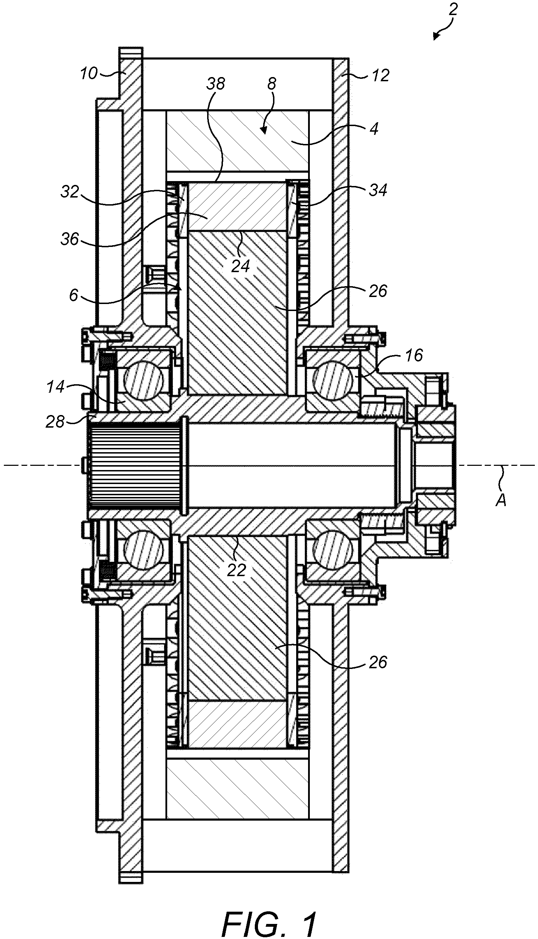

With reference to Figure 1, an electrical machine 2 comprises a stator 4 and a rotor 6. The stator 6 is supported in a housing 8. The housing 8 also mounts a front plate 10 and a rear plate 12 which respectively mount front and rear bearings 14, 16 which support the rotor 6. In an alternative configuration, a bearing 14, 16 may be provided at just one end of the rotor 6.

The stator 4 comprises a plurality of windings arranged on a core, as is known in the art and need not therefore be described further here.

The rotor 6 comprises a radially inner rotor hub 22, a radially outer rotor rim 24 and a plurality of spokes 26 extending between the radially inner hub 22 and the radially outer rim 24 for supporting the radially outer rim 24. In this embodiment, there are twelve equi-spaced spokes 26, but the number, spacing and physical dimensions of the spokes 26 may be chosen to provide the necessary mechanical strength to the rotor 6.

In this embodiment, the rotor hub 22, rotor rim 24 and spokes 26 are formed as a unitary one-piece component. In other embodiments, however, two or more of these components may be separately formed and suitably coupled together.

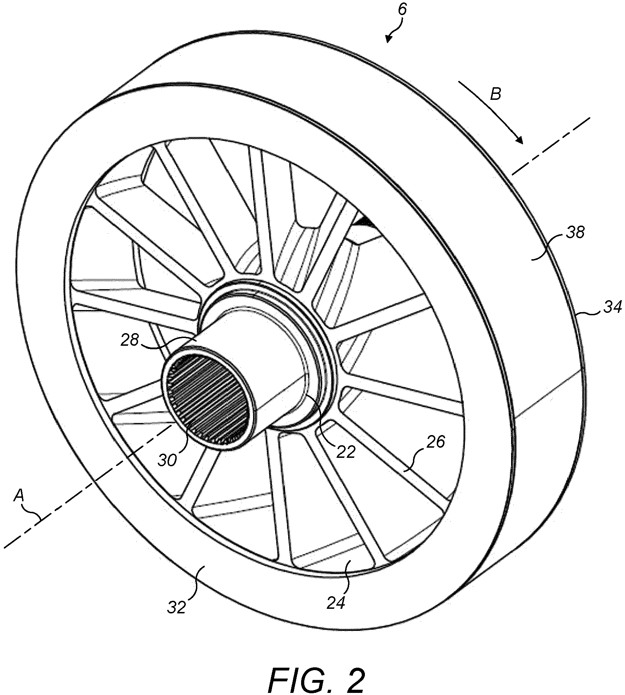

The radially inner hub 22 is coupled to a shaft 28 supported by the front and rear bearings 14, 16 for rotation about an axis of rotation A, which defines an axial direction of the rotor 6. The rotor 6 rotates about the axis A in a rotational direction B. The inner hub 22 may be an integral part of the shaft 28 or be a separate component mounted to the shaft 28. As can be seen in Figure 2, the shaft 28 has internal splines 30 for driving attachment to a rotary output or input (depending on whether the machine 2 is being used as a motor or a generator). Alternative drive configurations are possible, for example a bolted drive plate, a hirth coupling, or other couplings.

The rotor 6 further comprises a front wall 32 and arear plate 34 extending radially outwardly at the front and rear of the rotor rim 24.

A magnet 36, for example a permanent magnet, is supported on the rotor rim 24 between the annular front and rear walls 32, 34. A circumferentially extending cover 38 radially retains the magnet 36 on the rotor rim 24.

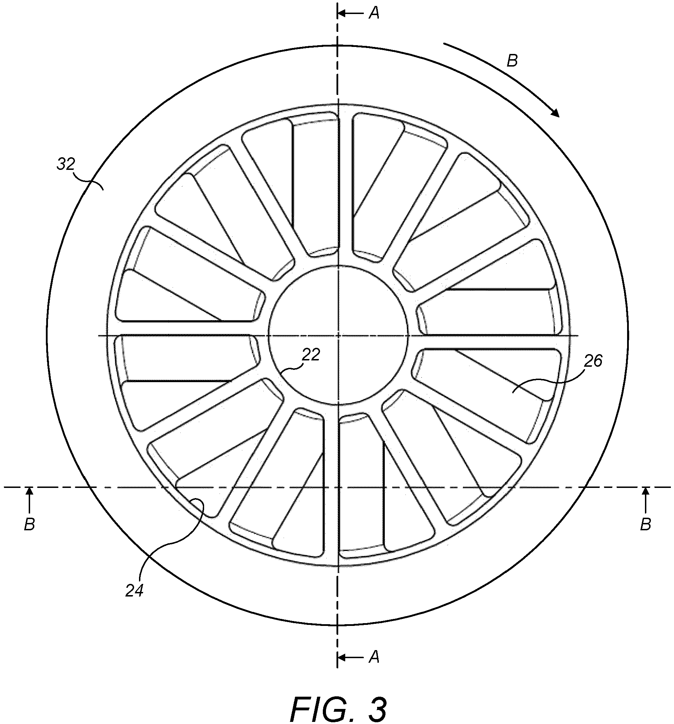

As can be seen most clearly from Figures 2, 3 and 5, the spokes 26 do not extend parallel to the axis of rotation A and axial direction of the rotor 6, but are arranged at an acute angle α thereto. That is, the spokes 26 do not extend parallel to the axial direction. The effect of angling the spokes 26 in this manner is that as the rotor 6 rotates, the spokes 26 will act as an impeller and draw air through the rotor 6, thereby cooling the rotor 6.

In this embodiment, the angle α is about 25°, however, the angle may be chosen to provide the desired aerodynamic performance and airflow and to facilitate manufacture. In some embodiments, the angle α may be between 10° and 40°. However, the angle could be greater than 0° and less than 90°, although there will be a loss of efficiency at the extremes of that range.

In this embodiment, the spokes 26 are angled at a constant angle α relative to the axial direction along their entire radial extent. However, in other embodiments, the spokes 26 may twist along their radial length such that the angle α varies along their length.

In this embodiment, the spokes 26 extend radially at their leading edges 50. In other embodiments, however, the spokes 26 may lean in a circumferential direction relative to the radial direction.

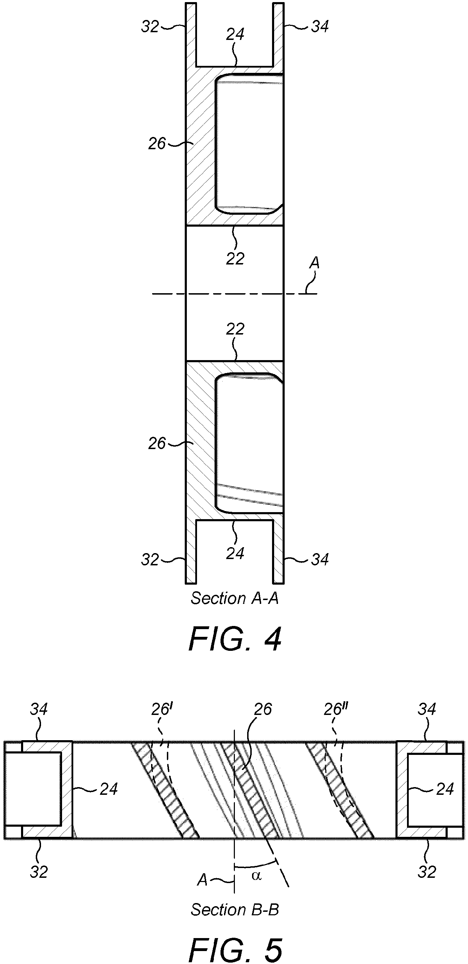

In the illustrated embodiment, the spokes 26 are substantially rectilinear in cross section, as can best be seen in Figure 5. Thus the spokes 26 are constructed as flat vanes in this embodiment. However, in other embodiments, the spokes 26 may curve axially (illustrated schematically as spoke 26' in Figure 5). In other embodiments, the spokes may be curved so as to have an airfoil shape in cross section (illustrated schematically as spoke 26" in Figure 5). A curved or airfoil shape may potentially improve the airflow through the rotor 6. However, the structural performance of the rotor 6 may limit the shaping of the spokes 26.

In the case of a planar spoke 26, the angle relative to the axial direction may be constant throughout the axial length of each spoke 26. In the case of a curved or airfoil shaped spoke 26', 26", however, this angle will vary along the axial length of the spoke 26', 26".

It will be understood that as the rotor 6 rotates the angled arrangement of the spokes 26 will act to draw air through the rotor 6, thereby cooling the rotor 6. While the angling of the spokes 26 may be optimised for cooling airflow when the rotor 6 is rotating in a particular design direction, some cooling airflow may still be provided when the rotor 6 is rotating in the opposite direction.

It will be appreciated that the electrical machine as described above has a number of advantages. The spokes 26 reduce the weight of the rotor 6 and at the same time act to induce a cooling airflow through the rotor 6. This avoids the need for a separate cooling fan to be coupled to the rotor 6. This reduces the number of parts in the machine 2, thus reducing the weight and cost of the machine 2. It also potentially simplifies the assembly of the machine 2, its bearings and lubrication system.

The disclosure is of application to all rotary electrical machines. It will, however, find particular application in high performance machines such as electrical propulsion motors and generators.

## Claims

1. A rotary electrical machine (2) comprising:
a stator (4); and
a rotor (6);
wherein the rotor (6) comprises:
a radially inner rotor hub (22) rotatable about an axis of rotation (A) which defines an axial direction of the rotor (6);
a radially outer rotor rim (24) configured to support a magnet (36); and
a plurality of spokes (26) extending between the rotor hub (22) and the rotor rim (24) for supporting the rotor rim (24);
wherein the spokes (26) are arranged relative to the axial direction of the rotor (6) so as to induce a flow of air through the rotor (6) when the rotor (6) rotates about the axis of rotation (A).

2. A rotor (6) for an electrical machine (2), the rotor (6) comprising:
a radially inner rotor hub (22) rotatable about an axis of rotation (A) which defines an axial direction of the rotor (6);
a radially outer rotor rim (24) supporting or configured to support a magnet (36); and
a plurality of spokes (26) extending between the rotor hub (22) and the rotor rim (24) for supporting the rotor rim (24);
wherein the spokes (26) are arranged relative to the axial direction of the rotor so as to induce a flow of air through the rotor (6) when the rotor (6) rotates about the axis (A).

3. A rotary electric machine as claimed in claim 1 or rotor as claimed in claim 2, wherein the spokes (26) are arranged at an angle to the axial direction.

4. A rotary electric machine or rotor as claimed in claim 3, wherein the spokes (26) are arranged at an angle of between 10° and 40° to the axial direction.

5. A rotary electric machine or rotor as claimed in claim 4, wherein the spokes (26) are angled at an angle of 25° to the axial direction.

6. A rotary electric machine or rotor as claimed in any of claims 2 to 6, wherein the spokes (26) are angled at a constant angle relative to the axial direction along their radial extent.

7. A rotary electric machine or rotor as claimed in any of claims 2 to 7, wherein the spokes (26) are angled at a constant angle relative to the axial direction along their longitudinal extent.

8. A rotary electric machine or rotor as claimed in any preceding claim, wherein the spokes (26) are rectilinear in cross section in the axial direction.

9. A rotary electric machine or rotor as claimed in any of claims 1 to 7, wherein the spokes (26') are curved in cross section in the axial direction.

10. A rotary electric machine or rotor as claimed in any of claims 1 to 7, wherein the spokes (26") are airfoil shaped in cross section in the axial direction.

11. A rotary electric machine or rotor as claimed in any preceding claim, wherein the spokes (26; 26'; 26") extend radially at their leading edges.

12. A rotary electric machine or rotor as claimed in any preceding claim, wherein the rotor hub (22), the rotor rim (24) and the spokes (26; 26'; 26"), are a unitary one piece component.

13. A rotary electric machine or rotor as claimed in any preceding claim, wherein the rotor (6) further comprises an annular front wall (32) and an annular rear wall (34) extending radially outwardly from the rotor rim (24), a magnet (36) being retained axially between the annular front wall (32) and the annular rear wall (34).

14. A method of manufacturing an electrical machine (2) comprising a stator (4) and a rotor (6), the rotor (6) comprising a radially inner rotor hub (22) rotating in use about an axis of rotation (A) defining an axial direction of the rotor (6), a radially outer rotor rim (24) supporting a magnet (36); and a plurality of spokes (26) extending between the rotor hub (24) and the rotor rim (24) for supporting the rotor rim (24), the method comprising arranging the spokes (26) relative to the axial direction of the rotor (6) so as to induce a flow of air through the rotor (6) when the rotor (6) rotates.

15. A method of cooling an electric machine (2) comprising a stator (4) and a rotor (6), the method comprising inducing an airflow through the machine (2) by rotating the rotor (6), the rotor (6) comprising a radially inner rotor hub (22) rotating about an axis of rotation defining an axial direction of the rotor (6), a radially outer rotor rim (24) supporting a magnet (36) and a plurality of spokes (26) extending between the rotor hub (22) and the rotor rim (24) for supporting the rotor rim (24), the spokes (26) being arranged relative to the axial direction of the rotor (6) so as to induce the flow of air through the rotor (6) when the rotor (6) rotates.
